Europäisches Patentamt

European Patent Office

Office européen des brevets

(19)

(11) Numéro de publication : **0 595 681 A1**

# (12) DEMANDE DE BREVET EUROPEEN

(21) Numéro de dépôt : **93402545.3**

(22) Date de dépôt : **15.10.93**

(51) Int. Cl.$^5$ : **G01P 11/00**

(30) Priorité : **26.10.92 FR 9212743**

(43) Date de publication de la demande :
**04.05.94 Bulletin 94/18**

(84) Etats contractants désignés :
**DE ES GB IT**

(71) Demandeur : **Société Anonyme dite: REGIE NATIONALE DES USINES RENAULT
34, quai du Point du Jour
F-92109 Boulogne Billancourt (FR)**

(72) Inventeur : **Taffin, Christian
16, rue de Lannoy, Gonnehem
F-62920 Chocques (FR)**
Inventeur : **Derouiche, Ali
5, rue Servien
F-92190 Meudon (FR)**
Inventeur : **Cnudde, Philippe
7, Allée Charles Gounod
F-92520 Beauchamp (FR)**

(54) **Procédé de détermination de la vitesse d'un véhicule routier et véhicule routier mettant en oeuvre ce procédé.**

(57) La détermination de la vitesse d'un véhicule s'effectue à partir du signal de vitesse de roue ($V_1$) le plus élevé ou de la moyenne de vitesse des roues arrière délivré en 22 (le cas échéant après écrêtement en 23 et correction en 24), qui est traité dans un filtre de Kalman (25) en fonction du signal d'accélération longitudinale mesurée ($\Upsilon_{mes}$) et d'un coefficient de fiabilité "ponder", avec adaptation en (26) des coefficients de filtre ($k_1$, $k_2$) en fonction de l'indice de freinage ($\Upsilon_{mes}$) et du signal de fiabilité "ponder".

On peut ainsi reconstruire une vitesse de référence ($V_{ref}$) le plus approchée de la vitesse réelle du véhicule, en vue notamment d'opérer un freinage approprié.

FIG.: 2

EP 0 595 681 A1

L'invention concerne la détermination de la vitesse d'un véhicule routier, notamment en phase de freinage où l'on utilise ladite vitesse du véhicule et les vitesses de roues et la décélération longitudinale pour assurer un mode de freinage souhaité. Dans ce cas, l'un des facteurs déterminants du mode de freinage est le taux de glissement de chaque roue qui est la différence entre la vitesse réelle du véhicule et de la vitesse de chaque roue rapportée à ladite vitesse réelle (glissement Sx = (Vréelle - Vroue)/Vréelle).

Comme le taux de glissement dépend de la vitesse du véhicule, toute erreur faite sur la vitesse du véhicule se traduira par une erreur sur le calcul du taux de glissement. Ces erreurs dégradent les performances du système complet. Aussi, il est important d'avoir une mesure précise d'une vitesse de référence.

Dans la plupart des modes de freinage de ce type, on élabore cette vitesse de référence ($V_{ref}$) aussi proche que possible de la vitesse réelle (Vréelle) du véhicule à partir des vitesses de roues pour des capteurs de vitesse coopérant avec chaque roue. En l'absence de glissement
--par exemple en l'absence de tout freinage-- la détermination de la vitesse de référence est faite en choisissant la vitesse de la roue la plus rapide ou en faisant la moyenne des différentes vitesses mesurées.

Au contraire, dès lors que le taux de glissement augmente, la précision obtenue sur la vitesse de référence ainsi calculée devient mauvaise. La vitesse de référence est en général sous-estimée, ce qui a pour effet de surestimer le taux de glissement, avec la conséquence de freiner la roue dans la zone instable du pneumatique.

Par ailleurs, la technologie actuelle conduit à disposer de mesures des vitesses des roues qui sont bruitées. La présence de ces bruits et pics parasites pollue la vitesse de référence.

La détermination de la vitesse de référence en prenant la vitesse de la roue la plus rapide ou la moyenne des quatre roues n'est donc pas fiable.

Plusieurs méthodes ont été proposées pour pallier ces inconvénients, par exemple l'utilisation additionnelle d'un capteur accélérométrique. Le problème qui se pose alors est la présence d'un "offset" sur le signal accélérométrique. (Par "offset" on entend un signal indéterminé au niveau zéro d'accélération).

Une autre solution consiste à limiter la décélération de la vitesse de référence à des valeurs prédéterminées. Ces limitations ne sont pas adaptées à tout type d'adhérence et sont également sensibles aux bruits.

La présente invention vise une détermination fiable de la vitesse de référence d'un véhicule et cet objectif de l'invention est atteint en procédant de la façon suivante dans des fenêtres temporelles ou périodes d'échantillonnage :

a) on forme un signal $V_1$ qui est représentatif:
- soit d'un signal de vitesse le plus élevé parmi les signaux $V_2$, $V_3$, $V_4$, $V_5$ de vitesse de roues dans le cas où un signal "indice de freinage" indique une phase de freinage ;
- soit de la moyenne des signaux de vitesse des roues arrière ($V_4$, $V_5$) dans le cas où un signal "indice de freinage" indique l'absence de freinage ;

b) on forme un signal corrigé $V_2$ à partir du signal $V_1$ et d'un glissement de consigne de roue Sxc selon la relation :

$$V_2 = \frac{1}{1 - Sxc} \cdot V_1$$

c) on traite le signal ($V_2$) pour délivrer un signal (V) obtenu à partir du signal ($V_2$) en limitant son augmentation dans le temps à une valeur prédéfinie et en limitant sa diminution dans le temps en fonction du signal instantané de décélération mesurée $\Upsilon_{mes}(t)$ ;

d) on traite un tel signal (V) obtenu à partir du signal ($V_1$) éventuellement écrêté et/ou éventuellement corrigé ($V_2$) dans un circuit du type filtre de Kalman reconstructeur de la vitesse de référence à partir dudit signal traité (V) et du signal instantané de décélération mesurée ($\Upsilon_{mes}$), et de coefficients de filtre ($k_1$) et ($k_2$).

L'utilisation finale d'un filtre de Kalman permet une élimination des bruits de mesure sans déphasage du signal et une compensation active de l'"offset" du signal accélérométrique. Si besoin est, on se reportera à la littérature relative aux filtres de Kalman et, à titre d'exemple, on cite les deux publications suivantes :
- "Automatique des systèmes linéaires" (Partie 2 - identification) de Philippe de Larminat et Yves Thomas, Flammarion Sciences (Paris) pages 138-165, en particulier pages 151 et suivantes ;
- "Commande de régulation par calculateur numérique" Foulard, Gentil, Sandraz - Editions Eyrolles (Paris), pages 374 à 398 et plus particulièrement pages 385 et suivantes.

Dans la présente application à la détermination de la vitesse de référence d'un véhicule routier, le filtre de Kalman est déterminé par les équations dynamiques suivantes:

$$\frac{d(V_{ref})}{dt} = \text{offset} + \gamma_{mes} + k_1(V - V_{ref}) \quad (1)$$

$$\frac{d(\text{offset})}{dt} = k_2 (V - V_{ref}) \quad (2)$$

alors que la vitesse de référence ($V_{ref}$) est calculée selon les relations :

$$V_{ref}(t) = \frac{1}{1 + Tek_1 + Te^2k_2} [ X_1 + Te\, X_2 ]$$

$$\text{offset}(t) = \frac{1}{1 + Tek_1 + Te^2k_2} [ - Tek_2 X_1 + (1 + Tek_1)X_2]$$

où

Te est la période d'échantillonnage
$$X_1 = V_{ref}(t - Te) + Te\gamma_{mes}(t) + Tek_1V(t)$$
$$X_2 = offset(t - Te) + Tek_2V(t).$$

L'invention concerne également tout véhicule routier mettant en oeuvre le procédé selon l'invention.

La présente invention est maintenant décrite, à titre d'exemple, en référence aux dessins annexés dans lesquels:
- la figure 1 est une vue schématique très partielle d'un véhicule équipé du dispositif selon l'invention,
- la figure 2 est un schéma du dispositif selon l'invention.

En se référant aux dessins annexés un véhicule de tourisme 1 comporte deux roues avant 2 et 3 et deux roues arrière 4 et 5. Chaque roue 2 à 5 est équipée d'un frein 6, 7 , 8, 9 respectivement, qui possède un maître cylindre récepteur dans lequel se déplace un piston appliquant les garnitures de frein avec la force requise contre une couronne de freinage 12,13,14,15 respectivement.

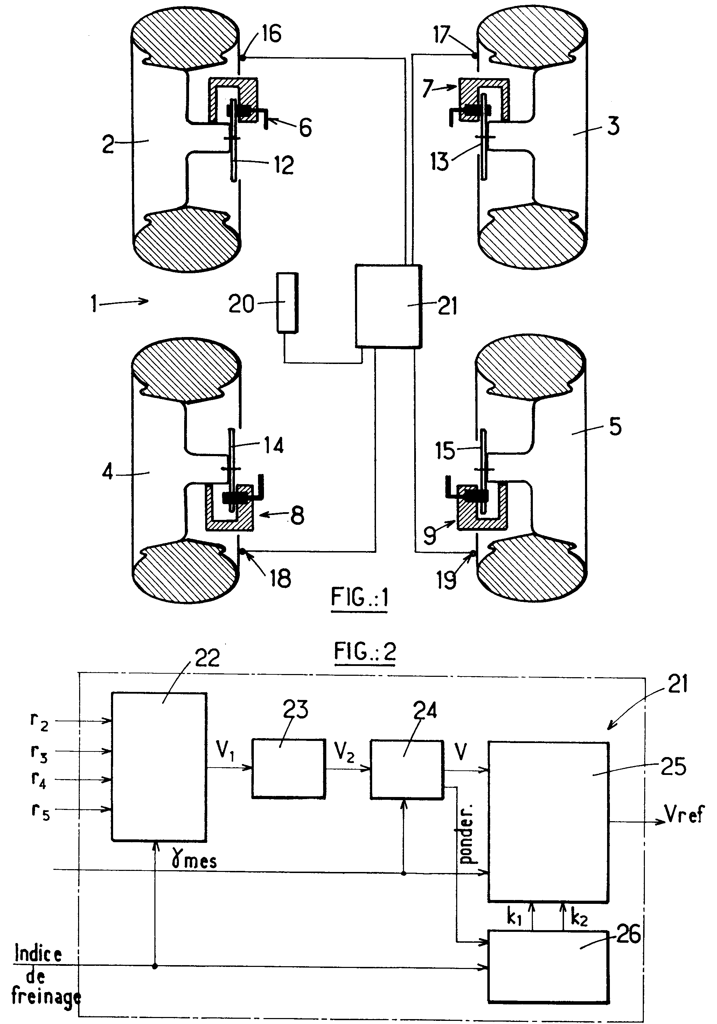

Chaque roue 2,3,4,5 est équipée de capteurs de vitesse 16,17,18,19 et un capteur 20 est placé dans le véhicule 1 pour mesurer la décélération longitudinale du véhicule 1, ces cinq capteurs 16-20 transmettant des signaux vers le dispositif de détermination de la vitesse de référence 21 décrit maintenant en référence à la figure 2, où l'on désigne par $r_2$, $r_3$, $r_4$, $r_5$ les signaux électriques correspondant aux mesures de vitesses des roues 2, 3, 4, 5 respectivement, effectuées par les capteurs 16, 17, 18, 19 et $\gamma_{mes}$ le signal électrique de la décélération mesurée par le capteur décélérométrique 20.

Ce dispositif 21 comprend un bloc 22 qui sélectionne le signal de vitesse le plus élevé parmi les quatre signaux $V_2$, $V_3$, $V_4$, $V_5$, ou qui effectue la moyenne des signaux de vitesse des roues arrière $r_4$, $r_5$ selon que l'indice de freinage indique respectivement que l'on se trouve en phase de freinage ou non. Les quatre signaux $r_2$, $r_3$, $r_4$, $r_5$ sont appliqués au bloc 22 qui délivre, à une sortie un signal $V_1$, représentatif de la vitesse de la roue tournant le plus rapidement autour de son axe, ou de la moyenne des vitesses des roues arrière 4 et 5.

L'"indice de freinage" introduit en entrée du bloc 22 caractérise le freinage ou non du véhicule. Différentes solutions sont envisageables, soit à partir du glissement des roues, ou des pressions de freinage, ou du capteur accélérométrique, etc...

Le dispositif 21 comprend également un bloc 23 qui corrige la vitesse constituant l'entrée de ce bloc 23 en fonction d'un glissement de consigne de roue et délivre une grandeur $V_2$ selon la relation :
$$V_2 = \frac{1}{1 - Sxc} \cdot V_1$$
Le signal $V_2$ est ensuite traité dans un bloc correcteur de signal 24 assurant une correction tenant compte du signal instantané de décélération mesurée $\Upsilon_{mes}$ et délivrant deux signaux, le premier V relatif à une vitesse de roue éventuellement moyennée et corrigée d'un glissement de consigne et éventuellement écrêtée en fonction de la décélération mesurée $\Upsilon_{mes}$, l'autre désigné par "ponder" relatif au degré de fiabilité de la vitesse selon l'une ou l'autre des trois modalités suivantes :

a) si la vitesse $V_2(t)$ en sortie du bloc 23 est supérieure à la vitesse V(t-Te) en sortie du bloc 24 à un instant précédent, alors la vitesse V(t) à l'instant présent est égale à la vitesse V(t-Te) à un instant précédent selon la formule :
$$V(t) = V(t - Te)$$
où Te est une durée qui correspond à la période d'échantillonnage.

De plus, le degré de fiabilité de la vitesse V(t) est moyen donc :
$$ponder = "moyen"$$
b) si la différence entre la vitesse $V_2(t)$ en sortie du bloc 23 et la vitesse V(t-Te) en sortie de bloc 24 à un instant précédent est supérieure en valeur absolue au produit de la période d'échantillonnage Te par la valeur absolue de la décélération mesurée $\Upsilon_{mes}$, affecté d'un coefficient $\underline{k}$ strictement supérieur à 1, alors on limite la diminution de la vitesse V selon la formule :
$$V(t) = V(t - Te) - k.Te.[\Upsilon_{mes}(t)]$$
De plus, le degré de fiabilité de la vitesse V(t) est faible donc :
$$ponder = "faible"$$
c) si la différence entre la vitesse $V_2(t)$ en sortie du bloc 23 et la vitesse V(t-Te) en sortie du bloc 24 à un instant précédent n'est ni supérieure à zéro ni supérieure en valeur absolue au produit de la période d'échantillonnage par la valeur absolue de la décélération mesurée et par un coefficient $\underline{k}$ strictement supérieur à 1, alors la vitesse V(t) en sortie du bloc 24 est égale à la vitesse en sortie du bloc 23 $V_2(t)$ soit :
$$V(t) = V_2(t)$$
De plus, le degré de fiabilité de la vitesse V(t) est fort donc :
$$ponder = "fort"$$
Le signal de vitesse V qui est représentatif du signal d'une vitesse de roues éventuellement moyenné en 22, corrigé du glissement en 23 et éventuellement corrigé en 24 en fonction de la décélération mesurée est ensuite appliqué à une entrée d'un filtre de Kalman 25, dont une autre entrée reçoit le signal de décélération mesurée $\Upsilon_{mes}$.

Ainsi qu'il a été expliqué précédemment, ce filtre de Kalman 25 est un filtre reconstructeur d'une vitesse de référence $V_{ref}$ apparaissant en sortie de ce filtre 25 et vise à épurer les signaux V et $\gamma_{mes}$ des différents bruits qu'ils incorporent, en particulier des bruits de mesure au niveau des signaux $r_2$, $r_3$, $r_4$, $r_5$ et $\gamma_{mes}$, et

en outre, pour ce qui concerne le signal de décélération $\gamma_{mes}$ d'un "offset" indéterminé.

Les équations dynamiques de ce filtre de Kalman 25 sont les suivantes :

$$\frac{d(V_{ref})}{dt} = \text{offset} + \gamma_{mes} + k_1(V - V_{ref}) \quad (1)$$

$$\frac{d(\text{offset})}{dt} = k_2 (V - V_{ref}) \quad (2)$$

Dans ces formulations (1) et (2), $\frac{d}{dt}( )$" représente l'opérateur de dérivation par rapport au temps.

$k_1$ et $k_2$ sont les coefficients du filtre ; ils permettent de régler la dynamique du filtre de Kalman (26).

La vitesse de référence $V_{ref}$ est calculée selon les relations :

$$V_{ref}(t) = \frac{1}{1 + Tek_1 + Te^2k_2} [ X_1 + Te\, X_2 ]$$

$$\text{offset}(t) = \frac{1}{1 + Tek_1 + Te^2k_2} [ - Tek_2X_1 + (1 + Tek_1)X_2]$$

où Te est la période d'échantillonnage

$$X_1 = V_{ref}(t - Te) + Te\gamma_{mes}(t) + Tek_1V(t)$$
$$X_2 = \text{offset}(t - Te) + Tek_2V(t)$$

Un bloc adaptateur 26 a pour fonction d'adapter les coefficients $k_1$ et $k_2$ du filtre de Kalman. En effet, ces coefficients $k_1$ et $k_2$ permettent de gérer l'importance relative des informations de décélération mesurée ($\gamma_{mes}$) et vitesse (V) en entrée du filtre de Kalman (25).

Lorsque l'information "ponder" issue du bloc 24 est égale à "forte" cela indique que l'information vitesse V issue du bloc 24 est proche de la vitesse réelle du véhicule. Il faut donc dans le bloc 25 privilégier l'information vitesse V issue du bloc 24 par rapport à l'information décélération mesurée $\gamma_{mes}$, ce qui correspond à des coefficients $k_1$ et $k_2$ élevés. Cela permet en outre de déterminer précisément et rapidement l'"offset" du capteur accélérométrique 20.

Lorsque l'information "ponder" issue du bloc 24 est égale à "moyen", cela indique que l'information vitesse V issue du bloc 24 a un degré de fiabilité comparable au degré de fiabilité du capteur accélérométrique 20. Il ne faut donc pas privilégier l'une ou l'autre des informations, ce qui correspond à des coefficients $k_1$ et $k_2$ moyens.

Lorsque l'information "ponder" issue du bloc 24 est égale à "faible", cela indique que l'information vitesse V issue du bloc 24 est une mauvaise estimation de la vitesse réelle du véhicule. Il faut donc privilégier l'information décélération mesurée $\gamma_{mes}$ issue du capteur accélérométrique 20 par rapport à l'information issue du bloc 24, ce qui correspond à des valeurs plus faibles des coefficients $k_1$ et $k_2$.

Lorsque l'indice de freinage indique le non-freinage du véhicule, on confère alors un poids maximal à l'information vitesse (V), ce qui correspond à des coefficients $k_1$ et $k_2$ très élevés. Cela permet de déterminer précisément et très rapidement l'"offset" du capteur accélérométrique 20.

## Revendications

1. Procédé de détermination de la vitesse d'un véhicule routier, notamment en phase de freinage, du genre où l'on mesure la vitesse par des capteurs (16, 17, 18, 19) la vitesse de chacune des roues (2, 3, 4, 5) et la décélération longitudinale ($\gamma_{mes}$) par un capteur accélérométrique (20), caractérisé en ce qu'on assure les opérations suivantes pendant des fenêtres temporelles ou période d'échantillonnage (t-t$_o$) ou (Te) :

   a) on forme (en 22) un signal $V_1$ qui est représentatif:
   - soit d'un signal de vitesse le plus élevé parmi les signaux de vitesse de roues $V_2$, $V_3$, $V_4$, $V_5$, dans le cas où le signal "indice de freinage" indique une phase de freinage ;
   - soit de la moyenne des signaux de vitesse des roues arrière ($V_4$, $V_5$) dans le cas où le signal "indice de freinage" indique l'absence de freinage ;

   b) on forme (en 23) un signal corrigé $V_2$ à partir du signal $V_1$ en fonction d'un glissement de consigne de roue Sxc selon la relation :

   $$V_2 = \frac{1}{1 - Sxc} \cdot V_1$$

   c) on traite (en 24) le signal ($V_2$) pour délivrer un signal (V) obtenu à partir du signal ($V_2$) en limitant son augmentation dans le temps à une valeur prédéfinie et en limitant sa diminution dans le temps en fonction du signal instantané de décélération mesurée $\gamma_{mes}(t)$ ;

   d) on traite un tel signal (V) obtenu à partir du signal ($V_1$) éventuellement écrêté et/ou éventuellement corrigé dans un circuit du type filtre de Kalman (25) reconstructeur de la vitesse de référence à partir dudit signal traité (V) et du signal instantané de décélération mesurée ($\gamma_{mes}$), et de coefficients de filtre ($k_1$) et ($k_2$).

2. Procédé de détermination de la vitesse d'un véhicule selon la revendication 1, caractérisé en ce que l'opération c) est conduite en délivrant en sortie de (24) un second signal dit "ponder" relatif au degré de fiabilité de la vitesse V et en opérant selon l'une des trois modalités suivantes :
   - dans le cas où le signal $V_2(t)$ en sortie de (23) est supérieur au signal V(t-Te) en sortie de (24) à un instant (t-Te), la vitesse V(t) à l'instant présent est égale à la vitesse V(t-te) à l'instant précédent (t-Te), Te représentant la période d'échantillonnage, et en outre, le degré de fiabilité "ponder" est qualifié de "moyen",

- dans le cas où la différence entre la vitesse $V_2$ en sortie de (23) et la vitesse V(t-Te) en sortie de (24) à un instant précédent (t-Te) est supérieure en valeur absolue au produit

k Te [$\gamma_{mes}$(t)]

(relation dans laquelle $\underline{k}$ est un coefficient supérieur à 1), on limite la diminution du signal de vitesse V selon la formule :

V(t) = V(t - Te) - k.Te.[$\gamma_{mes}$(t)]

et le degré de fiabilité "ponder" de la vitesse V(t) est qualifié de "faible",

- dans tous les autres cas, le signal de vitesse V(t) en sortie de (24) est égal au signal ($V_2$t) en sortie de (23) et le degré de fiabilité "ponder" est qualifié de "fort".

3. Procédé de détermination de la vitesse d'un véhicule routier selon la revendication 1, caractérisé en ce que les équations dynamiques de détermination du filtre de Kalman (25) sont les suivantes :

$$\frac{d(V_{ref})}{dt} = \text{offset} + \gamma_{mes} + k_1(V - V_{ref}) \quad (1)$$

$$\frac{d(\text{offset})}{dt} = k_2 (V - V_{ref}) \quad (2)$$

relations dans lesquelles "$\frac{d}{dt}()$" représente l'opérateur de dérivation par rapport au temps, et $k_1$, $k_2$ sont les coefficients du filtre de Kalman (26).

4. Procédé de détermination de la vitesse d'un véhicule routier selon la revendication 2, caractérisé en ce que la vitesse de référence ($V_{ref}$) est calculée dans le filtre de Kalman 25 selon les relations :

$$V_{ref}(t) = \frac{1}{1 + Tek_1 + Te^2k_2} [ X_1 + Te\, X_2 ]$$

$$\text{offset}(t) = \frac{1}{1 + Tek_1 + Te^2k_2} [ - k_2TeX_1 + (1 + Tek_1)X_2]$$

où Te est la période d'échantillonnage

- $X_1 = V_{ref}(t\text{-}Te) + Te\gamma_{mes}(t) + Tek_1V(t)$
- $X_2 = \text{offset}(t\text{-}Te) + Tek_2V(t)$

5. Procédé de détermination de la vitesse d'un véhicule routier selon la revendication 1 et/ou 3 et/ou 4, caractérisé en ce que l'on ajuste les coefficients ($k_1$) et ($k_2$) du filtre de Kalman (25) selon les modalités suivantes:

- si le signal "ponder" issu de (24) est "fort", les coefficients ($k_1$) et ($k_2$) sont à des valeurs élevées ;
- si le signal "ponder" issu de (24) est "moyen", les coefficients ($k_1$) et ($k_2$) sont à des valeurs moyennes ;
- si le signal "ponder" issu de (24) est "faible" les coefficients ($k_1$) et ($k_2$) sont à des valeurs faibles.

6. Véhicule routier équipé d'une installation de détermination de sa vitesse du genre comprenant :

- des capteurs de vitesse de roues (16, 17, 18, 19) pour chaque roue (2, 3, 4, 5), délivrant des signaux ($V_2$, $V_3$, $V_4$, $V_5$) ;
- un capteur de la décélération longitudinale (20) délivrant un signal ($\gamma_{mes}$) ;
- un bloc sélectionneur (22) du signal de vitesse de roues ($r_2$ ou $r_3$ ou $r_4$ ou $r_5$) qui est le plus élevé et délivrant un signal ($V_1$) ou de la moyenne des signaux ($V_4$, $V_5$) des roues arrière (4 et 5) ;
- un bloc correcteur (23) en fonction d'une valeur de consigne de roue Sxc ;
- un bloc limiteur-écrêteur (24) délivrant un signal de vitesse (V) et un signal ("faible", "moyen", "fort"), du degré de fiabilité du signal de vitesse (V) ;
- un filtre de Kalman (25) traitant le signal de vitesse (V) en fonction du signal de décélération mesurée ($\gamma_{mes}$) et de coefficients ($k_1$) et ($k_2$).

7. Véhicule routier selon la revendication 6, caractérisé en ce que le filtre de Kalman (25) est équipé d'un bloc adaptateur (26) de réglage des coefficients de filtre ($k_1$, $k_2$).

FIG.:1

FIG.:2

Office européen
des brevets

**RAPPORT DE RECHERCHE EUROPEENNE**

Numero de la demande

EP 93 40 2545

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | DE-A-39 17 976 (BAYERISCHE MOTOREN WERKE AG)<br>* colonne 1, ligne 35 - ligne 66 *<br>--- | 1,6 | G01P11/00 |
| A | PATENT ABSTRACTS OF JAPAN<br>vol. 16, no. 179 (P-1345)28 Avril 1992<br>& JP-A-40 020 860 (KAJIROU WATANABE)<br>* abrégé *<br>--- | 1,6 | |
| A | EP-A-0 387 384 (SIEMENS AKTIENGESELLSCHAFT)<br>* colonne 3, ligne 39 - colonne 4, ligne 10 *<br>----- | 1,6 | |

**DOMAINES TECHNIQUES RECHERCHES (Int.Cl.5)**

G01P

Le présent rapport a été établi pour toutes les revendications

| Lieu de la recherche | Date d'achèvement de la recherche | Examinateur |
|---|---|---|
| LA HAYE | 7 Février 1994 | Hansen, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C03)